Europäisches Patentamt

European Patent Office

Office européen des brevets

(19)

(11) Publication number: **0 238 135 B1**

(12) # EUROPEAN PATENT SPECIFICATION

(45) Date of publication of patent specification: **02.12.92** (51) Int. Cl.⁵: **C09K 3/10,** C08L 53/02, C09J 125/04

(21) Application number: **87200447.8**

(22) Date of filing: **10.03.87**

(54) **Hot melt sealant compositions.**

(30) Priority: **21.03.86 US 842340**

(43) Date of publication of application:
**23.09.87 Bulletin 87/39**

(45) Publication of the grant of the patent:
**02.12.92 Bulletin 92/49**

(84) Designated Contracting States:
**BE DE ES FR GB IT NL SE**

(56) References cited:
**GB-A- 2 115 823**
**US-A- 4 286 077**

(73) Proprietor: **SHELL INTERNATIONALE RESEARCH MAATSCHAPPIJ B.V.**
**Carel van Bylandtlaan 30**
**NL-2596 HR Den Haag(NL)**

(72) Inventor: **Chin, Steven Soohyun**
**6301 Sierra Blanca No. 4511**
**Houston Texas 77083(US)**
Inventor: **Sanders, Andrea**
**1226 Crossfield Drive**
**Katy Texas 77450(US)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to improved adhesives, sealants and caulking compounds. More particularly, it relates to solvent free, hot melt sealant compositions containing mixtures of hydrogenated styrenic block copolymers with tackifying resins and reinforcing resins which yield a sealant composition having improved adhesion without a primer, creep resistance at elevated temperatures and low moisture vapour transmission rates, rapid build up in viscosity with cooling and thixotropic application characteristics.

From UK patent application No. 2,115,823 a sealant composition is known comprising a selectively hydrogenated monoalkenyl arene-diene multiblock copolymer, a selectively hydrogenated monoalkenyl arene-diene diblock copolymer, a tackifying resin compatible with the hydrogenated diene blocks and a resin which is compatible with the monoalkenyl arene polymer blocks. The weight ratio multiblock copolymer versus diblock copolymer ranges from 50/50 to 90/10. Consequently, the sealant has a high cohesive strength due to which adhesive failure to the substrate occurs when peel tests are performed.

US patent specification 4,294,733 concerns a sealant system comprising an adhesive composition and a primer composition. The use of a primer provides relatively good adhesion and cohesive failure in peel tests for adhesion. Both adhesive and primer compositions involve the use of Kraton G rubber, which has low moisture transmission rates compared to unsaturated Kraton D rubber products. "Kraton G" is a trademark for block copolymers having two polystyrene endblocks linked to a substantially saturated polyolefin rubber midblock. "Kraton D" is a trademark for block copolymers having two polystyrene endblocks linked to an unsaturated polyolefin rubber midblock. The adhesive composition has a moisture vapour transmission rate of not more than about 0.5 g per $m^2$ per day, measured at 38 °C and comprising per hundred parts by weight of the adhesive composition, from 5 to about 50 parts by weight of the adhesive copolymer having two polystyrene endblocks linked to a substantially saturated polyolefin rubber midblock, from about 5 to about 50 parts by weight of an aliphatic hydrocarbon resin having a melting point not less than 60 °C, from about 2 to about 40 parts by weight of a curable epoxy resin and a finely divided inorganic filler, and the primer composition. A primer was needed when using the Kraton G rubber formulation in order to obtain a sufficiently strong bond for bonding panes of glass to a spacer assembly. In some instances, additional heat, pressure and ultraviolet radiation was required to assure a secure bond.

It is an object of the present invention to provide a hot melt sealant composition prepared from a diblock copolymer, triblock/diblock copolymer, a triblock copolymer, or mixtures thereof that is 100% solids, one component, with a low moisture vapour transmission rate, high peel adhesion to glass and aluminium and does not require the use of a primer.

It is a further object of the invention to adjust the cohesive strength of the sealant by formulating the sealant to a specific A-B-A/A-B ratio thereby achieving cohesive failure in peel tests for adhesion while maximizing cohesive strength.

Accordingly, the invention provides a hot melt sealant composition which comprises:-

a. 0 to 50 parts by weight of a multiblock copolymer having at least two endblocks A and at least one elastomeric midblock B;

b. 50 to 100 parts by weight of one or more diblock copolymers consisting of one block A and one block B', wherein: the blocks A and A' comprise monoalkenyl arene blocks and the blocks B and B' comprise substantially completely hydrogenated conjugated diene polymer blocks, and the average molecular weight of the blocks A and A' is greater than the minimum molecular weight needed to obtain microphase separation and domain formation of the blocks A and A', and is less than the maximum molecular weight which would render the polymer incapable of being melt processed;

the sum of the amounts of components (a) and (b) being 100 parts by weight;

c. 50 to 400 parts by weight per 100 parts by weight of (a) and (b) of a midblock compatible component wherein said midblock compatible component is preferentially compatible with block B and B', said component present in a content sufficient to maintain the resultant composition in a pliable condition at room temperature and to maintain the glass transition temperature of the resultant composition below 10 °C; and

d. 0 to 100 parts by weight per 100 parts by weight of (a) and (b) of an endblock compatible resin wherein said resin is preferentially compatible with blocks A and A′ and is a coumarone-indene resin, a polystyrene resin, a vinyltoluene-alphamethylstyrene copolymer or a polyindene resin.

The average molecular weight of the A and A′ blocks are between 3,000 and 40,000.

The monoalkenyl arene content of the multiblock and diblock copolymers is no more than the maximum weight per cent needed to retain a modulus suitable as a sealant in the resultant composition and no less than the minimum weight per cent needed to obtain the desired phase separation and the desired cohesive strength. The average monoalkenyl arene content is between 7% and 45% and preferably between 10% and 40% by weight. The most preferred weight per cent is between 10% and 30%, particularly between 15% and 30%. Very good results have been obtained with said contents being in the range of from 15% to 18%.

The hot melt sealant formulations of the instant invention can also include fillers, pigments, ultraviolet inhibitors, antioxidants, adhesion promoters and thixotropic agents.

The midblock compatible component can be either a midblock compatible resin or a midblock compatible plasticizer or mixtures thereof. When mixtures of midblock compatible components are used, each may be included in the formulation up to a total of 400 parts by weight.

The midblock compatible resins may be any of a variety of hydrocarbon resins, such as hydrogenated rosins, synthetic polyterpenes and the like. For optimum heat stability, weatherability and compatibility, the preferred tackifying resin is a saturated resin, e.g. a hydrogenated dicyclopentadiene resin or a hydrogenated polystyrene or polyalphamethylstyrene resin.

The midblock compatible plasticizer may be rubber extending plasticizers, or compounding oils or liquid resins. These may be oils having a high content of saturated compounds or of aromatic compounds. Naphthenic or paraffinic processing oils having a low content of aromatic compounds are preferred.

The endblock compatible component is used at a content which is less than the solubility limit of the component in the polymer with utility to maintain the cohesive qualities of the resultant composition at elevated temperatures.

The present invention also includes sealant compositions comprising combinations of at least one of the group consisting of diblock copolymer, triblock/diblock copolymer, triblock copolymer, and mixtures thereof.

Kraton G rubber in solvent based sealants have demonstrated thermal, oxidative and ultraviolet stability, excellent mechanical properties at room temperature, high upper service temperature, good ozone resistance, and resistance to slump at elevated temperatures. Although adequately fulfilling the performance requirements for some sealants, solvent systems have the disadvantages of solvent release, long cure time, and shrinkage. A solventless system has the advantage of low energy consumption, high speed processing and little or no air pollution. In addition, saturated Kraton G rubber is thermally stable during heat processing and exhibits excellent weatherability in outdoor applications. Kraton G rubber based hot melt sealants would have excellent mechanical properties rivaling silicone but with lower moisture vapour transmission (MVT) rates, the hot melt processing advantages of butyl hot melts but with better low temperature flexibility and creep resistance and adhesion comparable to polysulphides but with better ultraviolet resistance.

The most significant advantage of a hot melt sealant based on Kraton G rubber is hot melt processing. Some of the advantages of hot melt processing are: (1) simple application, requiring no mixing or proportioning of reactants, (2) rapid set to a solid state allowing rapid production rates. Units can be moved and packaged within minutes after fabrication (3) virtually no waste. Trim or excess sealant can be reused. In contrast to the inherently high viscosity of partially crosslinked butyl based hot melt systems, physical crosslinking Kraton G rubber sealants can be formulated at lower viscosity than butyls. The advantages of high speed processing equipment development, including melt-on-demand applicators which reduce the pot-life requirement, reduce the possibility of thermal degradation.

A one-part, single-seal hot melt sealant based on Kraton G rubber will have a good balance of properties matching or exceeding the unique advantages of commercial sealants. By reinforcing the domain structure of Kraton G rubber in sealants, formulations can be developed with the proper balance of properties: high upper service temperature without slump or creep, low temperature flexibility and good adhesion to a broad range of substrates and excellent weatherability inherent to saturated Kraton G rubber.

At elevated temperatures polystyrene domains soften and Kraton G rubber based compounds can be processed as thermoplastics. Upon cooling polystyrene domains reform to give outstanding properties without chemical crosslinking.

Block copolymers with polyisoprene and polybutadiene midblock segments have found a wide variety of applications. Saturated S-I-S and S-B-S block copolymers, designated S-EP-S and S-EB-S, have better ultraviolet and thermal stability than their unsaturated counterparts. Diblock S-EB and S-EP polymers that are weaker than triblock polymers are also available. By blending diblock and triblock polymers in specific ratios, sealants can be formulated with optimum cohesive strength such that the sealant demonstrates good peel adhesion and fails cohesively in peel.

This composition uses Kraton G rubber of three types: A-B diblock copolymer, A-B-A/A-B copolymer, and A-B-A triblock copolymer. The blocks A and A$'$ have average molecular weights ranging from 4,000 to 150,000. The elastomeric hydrogenated polyconjugated diene block B has average molecular weights ranging from 18,000 to 250,000 and even 500,000. The poly(conjugated diene) block contains at least 20% of the monomer units polymerized in the 1,2 configuration. Hydrogenation of those blocks is carried out to a point where at least 95% of the aliphatic double bonds is saturated, and less than 10 per cent of the

EP 0 238 135 B1

aromatic double bonds of the poly(alpha-monoalkenyl arene) block are hydrogenated.

Blocks A comprise predominantly polymer blocks of at least one monoalkenyl arene while blocks B comprise predominantly hydrogenated polymer blocks of at least one conjugated diene.

Blocks A are prepared by block polymerization of such monomers as styrene and vinyltoluene. Blocks B are prepared by block polymerizing conjugated dienes such as butadiene or isoprene and thereafter hydrogenating the polymer block.

Each block A or A′ for a triblock or a diblock copolymer preferably has a true average molecular weight in the range of from 4,000 to 50,000, more preferably from 7,000 to 40,000 and most preferably from 10,000 to 25,000.

Each B block of the ABA block copolymer is suitably twice the size of the B′ block of the A′B′ block copolymer.

For the block B, the true molecular weights are preferably in the range of 18,000 to 300,000, more preferably in the range of 70,000 to 225,000 and most preferably in the range of 150,000 to 200,000.

For the block B′, the true molecular weights are in the range of 9,000 to 150,000, preferably in the range of from 35,000 to 115,000, and more preferably in the range of 75,000 to 100,000.

These molecular weights are true molecular weights corrected from styrene equivalent molecular weights from gel permeation chromotography.

Tackifying resins are blended with the block copolymer to provide tack. Examples of tackifying resins which may be used in the compositions according to the present invention are terpene resins (Piccohesive 125); polyterpene resins (Wing Tack 95 and Foral 105); phenolic resins (SP559 and Super Beckocite 2000); hydrogenated rosin (Stabilite ester 10); and hydrocarbon resins (Nevillac 10 and ERJ 683). Typical plasticizers are polybutylenes having a molecular weight not to exceed about 10,000; (Vistanex LMMS); phosphate esters (Santicizer 148); dibutyl phthalate; low temperature plasticizers such as straight chain aliphatic acid esters (TP90B, TP95, TP680); paraffin oils (Sun Par 2100); coal tars, asphalts; and Thiokol TP95 and T90B. Chlorinated polyphenyl (Aroclor 5460) and chlorinated biphenyl (Aroclor 1254) may be used for both their tackifying and plasticizing properties.

More particularly, Regalrez 1018 (Hercules) and ECR 327 (Exxon) are preferably present in the hot melt sealant compositions.

The polymers and tackifying resins are intimately mixed and blended with plasticizers to lower the modulus of the sealant and in some cases, lower the overall cost in making the hot melt sealant compositions according to the present invention.

Like plasticizers, adhesion promoters, such as organo silanes or organotitanates can be added to the mixture.

Like plasticizers, adhesion promoters are incorporated in most compositions in amounts ranging from 0.5 to 50 parts by weight for each 100 parts by weight of the elastomer and are preferably epoxy resins, organo silanes, organotitanates, and mixtures thereof. Typical adhesion promoters are epoxy resins having an epoxide equivalent of from 150 to 3000 such as the resins sold by Shell Chemical Company under the trade names Epon 1002 and Epon 828. Among the organic silanes employed are those sold by Union Carbide Corporation which are vinyl, cyclic epoxy, aliphatic epoxy and methacryloxy silanes identified as A-186, A-187, A-153 and A-151.

Various kinds of inert fillers can be added to the mixture. These fillers can include clay, calcium carbonate, talc and the like. Pigments such as titanium dioxide and carbon blacks may also be included.

A new type of block copolymer, hereinafter referred to as Block copolymer 3 having a 30% coupled version of a triblock blended with uncoupled triblock in a hot melt sealant formulation has been found to be extremely effective in achieving the objects of the invention set forth hereinbefore. The polystyrene domains are reinforced with an endblock resin, as described hereinbefore, and the sealant resists slump at elevated temperatures. A midblock tackifying resin provides tack. The plasticizer which may be optionally added lowers the modulus, and provides a lower cost overall. The addition of the fillers lowers cost and reduces slump in the adhesive. The antioxidants and ultraviolet inhibitors/stabilizers enhance the weatherability and the processing stability of the novel composition. A crystalline polymer with high melt flow and low molecular weight that forms a third phase but improves processability and upper service temperature may be included in the final formulation.

Polymeric compositions described above can provide sealant compositions which are capable of extrusions as a hot melt and harden to yield a non-tacky cohesive elastic mass having a desirable moisture vapour transmission. Moisture vapour transmission rates (MVTR) as used here, are determined by ASTM method E-96.

A desirable MVTR for the compositions according to the invention is less than 0.2 g cm per $m^2$ per day, measured at 25 °C or less than 1.0 g cm per $m^2$ per day measured at 38 °C.

4

To produce any of the compositions according to the invention and to determine the advantages and characteristics of the formulations, the following methods can be followed:

Mix approximately 450 g of test formulation at 177 °C for 30 minutes in a Perkin/Elmer hot oil mixer equipped with a sigma blade mixing head and nitrogen purge. High shear sigma blade mixers or twin-screw extruders are particularly suited for Kraton G rubber based sealants which exhibit a non-Newtonian variation of viscosity with shear rate. The order of addition of ingredients aims for good mixing in a short amount of time. Preferably if the midblock resin is added first, agglomeration of polymer to mixer blades can be avoided. To increase the shearing action solid ingredients can be added to the mixer at one time.

Tests which can be conducted on the resultant sealant formulation, include Shore A Hardness, Tensile Strength, Elongation at Break, Tensile Stress Modulus (ASTM D412), 180 Degree Peel to glass, aluminium and steel, Slump in a Vertical Channel, Shear Adhesion Failure Temperature Flexibility. These tests were chosen to determine mechanical properties of the formulated sealant, the range of service temperatures and adhesion capability.

Other tests relevant to field performance include Moisture Vapour Transmission rate (ASTM E96), Seal Durability of Sealed Insulating Glass Units (ASTM E773), Frost Point of Sealed Insulating Glass Units (ASTM E546) and CGSB 12-GP on Insulating Glass Units, a Canadian Standard.

Samples for testing can be prepared using a "Little Squirt" (Slautterback Corp. model LS-10) hot melt applicator. Separate heaters and thermostats for the tank and hose allow the delivery temperature to be closely controlled at 177 °C.

The results of peel adhesion tests for the different formulations were prepared by heat compression in platens at 130 °C and prepared from a hot melt gun applicator (Hardman "P" Shooter, Model 240) and set forth in the tables. Application of hot sealants formulations to cold substrates by the hot melt gun applicator showed significantly worse adhesion than sealant formulations applied by compression under heat. To determine the effect of substate temperature, tests were conducted on both room temperature substrates and substrates heated to 130 °C. Hot applied test formulations onto cold substrates without further heat processing approximates actual field application and gives good indications of performance in the field.

The novel sealant formulations contained Kraton rubbers selected on the basis of low melt viscosity and intermediate styrene endblock size. Low melt viscosity provided formulating latitude and good wetting of the substrate. An intermediate size endblock provided a domain structure large enough to "build-up" the endblock with endblock reinforcing resins while maintaining moderate hardness. One Kraton rubber formulation having a 30/70 blend of an S-EB-S bloc copolymer and an S-EB bloc copolymer was used and is denoted as block copolymer 2 in the tables hereinafter. Another Kraton rubber formulation is an S-EB block copolymer, which is half the molecular weight of the S-EB-S block copolymer and is referred to as block copolymer 3.

The midblock resin was chosen to keep the rubber midblock glass transition temperature (Tg) as low as possible while providing tack. Low temperature flexibility at -30 °C to -40 °C is required to prevent cracking or crazing failure of the sealant during low temperature exposure. Since the polymer midblock Tg is -58 °C, the use of a tackifying resin in large quantities results in an increase in midblock Tg, leading to embrittlement at low temperatures. The addition of large amounts of Hercules resin Regalrez 1018 which has a Tg of -24.5 °C will not increase Tg to the extent other resins with higher Tg would. Recently, Exxon resin ECR 327 has become available with a Tg of -35 °C. This resin is claimed to have equivalent stability to Hercules Regalrez resins but has not been tested.

The endblock resin was chosen on the basis of high Tg and stability. Hercules resins Kristalex 5140 and Endex 160 have glass transition temperatures of 86 °C and 113 °C, respectively. Both are crystal clear with excellent thermal and ultraviolet stability. Both resins were studied for their effect on the upper service temperature, i.e. resistance to slump and shear at elevated temperatures. Studies on clear solvent-based sealants suggest that a small quantity of endblock resin in a sealant with a sufficiently large polystyrene endblock size will produce a clear sealant. Studies for clarity were not conducted.

A high melt flow polypropylene (PP) was included in the formulation studies to raise the upper service temperature. Isotactic polypropylene has a melting point temperature of 165 °C. In Kraton rubber compounds, PP can form an interpenetrating network (IPN) under the proper processing conditions. At service temperatures below its melting temperature the PP IPN gives higher upper service temperatures in the sealant as measured by slump and SAFT.

To improve resistance to thermal, oxidative and ultraviolet degradation a combination of hindered phenolic antioxidant (Irganox 1010), benzotriazole ultraviolet inhibitor (Tinuvin P) and a hindered amine ultraviolet inhibitor (Tinuvin 770) are used to stabilize the formulation against degradation. Tinuvin P and Irganox 1010 are known to have a synergistic effect in polymer stabilization.

The effects of endblock resin as compared to PP in upper service improvement are lower viscosity and modulus, greater elongation, peel, lap shear and SAFT than for the same parts per hundred (phr) of PP. This demonstrates the improvement in properties that are possible through reinforcement of polystyrene domains structure in contrast to reinforcement through a third phase.

The use of Endex 160 at 50 phr gives dramatic improvements in properties. The effect on upper service temperatures is equivalent to 100 phr of Kristalex 5140 in tensile strength, SAFT, lap shear and slump. Peel to glass and elongation exceeds that of 100 phr Kristalex 5140 while hardness and viscosity increase to a lesser extent. Based on these results Endex 160 is chosen over Kristalex 5140 as the endblock resin.

A high performance insulating glass edge sealant must satisfy many requirements as discussed in the introduction. Of these requirements, peel adhesion to cold substrates may be considered a primary requirement since it affects many critical properties of the sealant. Once good adhesion to cold substrates is achieved the proper adjustments in the formulation will lead to a sealant with a good balance of properties.

The following Examples further illustrate the invention.

The polymers used in the Examples are shown in Tables 1 and 2.

## TABLE 1

|  | Polymer Type | Polystyrene Content (%wt) | A-B-A/A-B Ratio |
|---|---|---|---|
| Block copolymer 1 | A-B-A Triblock | 30 | 100/0 |
| Block copolymer 2 | A-B Diblock | 24 | 0/100 |
| Block copolymer 3 | A-B-A/A-B | 30 | 30/70 |
| Block copolymer 4 | A-B Diblock | 17 | 0/100 |
| Block copolymer 5 | A-B-A/A-B | 17 | 70/30 |
| Block copolymer 6 | A-B Diblock | 15 | 0/100 |
| Block copolymer 7 | A-B-A/A-B | 15 | 60/40 |
| Block copolymer 8 | A-B Diblock | 30 | 0/100 |

## TABLE 2

|  | Polymer Type | Molecular Wt. |
|---|---|---|
| Block copolymer 1 | A-B-A Triblock | 7,000-35,000-7,000 |
| Block copolymer 2 | A-B Diblock | 40,000-105,000 |
| Block copolymer 3 | A-B-A/A-B | 7,000-35,000-7,000/7,000-17,000 |
| Block copolymer 4 | A-B Diblock | 11,000-57,000 |
| Block copolymer 5 | A-B-A/A-B | 11,000-114,000-11,000/11,000-57,000 |
| Block copolymer 6 | A-B Diblock | 15,000-85,000 |
| Block copolymer 7 | A-B-A/A-B | 15,000-170,000-15,000/15,000-85,000 |
| Block copolymer 8 | A-B Diblock | 7,000-17,000 |

These polymers noted hereinbefore are one of three types:
A-B-A triblock, A-B diblock or A-B-A/A-B triblock/diblock copolymers where A is polystyrene and B is hydrogenated polybutadiene or polyisoprene. These polymers may be used in hot melt sealant formulations alone or in various combinations to yield a final hot melt sealant formulation containing a specific A-B-A/A-B ratio. When A-B, A-B-A/A-B, and A-B-A type block copolymers are used alone or in combination for the purpose of achieving low cohesive strength in the hot melt sealant, there are six difference classes that provide a low A-B-A/A-B ratio and increase the possibility of cohesive failure in peel tests for adhesion; these classes include:-

Class 1:     A-B diblock copolymer
Class 2:     A-B-A/A-B block copolymer
Class 3:     A-B diblock copolymer and A-B-A triblock copolymer
Class 4:     A-B-A/A-B block copolymer and A-B diblock copolymer
Class 5:     A-B-A/A-B block copolymer and A-B-A triblock copolymer
Class 6:     A-B-A/A-B block copolymer, A-B diblock copolymer and A-B-A triblock copolymer.

Block copolymer 1, an A-B-A triblock copolymer, is included to demonstrate conventional prior art technology. Block copolymers 2 through 8 are high molecular weight polymers that provide a balance of properties such as improved high temperature creep resistance, good adhesion, and thixotropic application characteristics.

Example 1

Table 3 compares the water vapour transmission rate of unsaturated S-B-S or S-I-S polymers such as Kraton D formulations to block copolymer 1 being an S-EB-S polymer in which the EB block is substantially completely hydrogenated. Tested under standard testing condition of 37.8 °C and 90% relative humidity, hydrogenated S-EB-S block copolymer 1 allows less water vapour to permeate than unsaturated S-I-S or S-B-S polymers. In the novel sealant applications where the sealant must provide a barrier function to moisture penetration, these hydrogenated block copolymers are preferred over Kraton D block copolymers.

TABLE 3

| Water Vapour Transmission Rates of Block Copolymers | |
| --- | --- |
| | g cm per $m^2$ per day |
| Block copolymer SBS | 1.07 |
| Block copolymer SIS | 0.871 |
| Block copolymer 1 | 0.35 |

Example 2

The effect of an A-B diblock copolymer in an A-B-A/A-B polymer such as block copolymer 3 is illustrated in Table 4. The tensile strength of block copolymer 3 is 2.41 MPa at break whereas the tensile strength at break of block copolymer 1 is 31.0 MPa. Hot melt sealants formulated with Kraton Formulation I are high in cohesive strength and will not fail cohesively in peel tests for adhesion without a primer.

TABLE 4

| Comparative Properties of Thermoplastic Rubbers | | |
| --- | --- | --- |
| | Block Copolymer 1 | Block Copolymer 3 |
| Tensile strength at break, (MPa) | 31.0 | 2.41 |
| 300% Modulus, (MPa) | 4.83 | -- |
| Elongation at Break (%) | 500 | 200 |

Example 3

The effect of adjusting the A-B-A/A-B ratio is illustrated in Table 5. In Table 5 as well as in the subsequent Tables 6 to 9, the formulations according to the invention are indicated by Roman numbers whereas the comparative formulations are indicated by capitals. By blending block copolymer 1 with block copolymer 3, the A-B-A/A-B ratio in the sealant formulation is increased from 30/70, 50/50, to 70/30 in formulations I, II and A respectively. The effect of a higher A-B-A/A-B ratio is to increase tensile strength, elongation, modulus and hardness. Additionally, a higher ratio of A-B-A/A-B somewhat improves the upper service temperature properties such as slump and SAFT. At high A-B-A/A-B ratios, however, the mode of adhesion failure to glass becomes adhesive failure to the glass substrate resulting from the high cohesive strength of the sealant. Test results in Table 5 show the effect of coupling efficiency on performance. A monotonic increase in moduli, tensile strength and elongation is observed. Melt viscosity, hardness, lap shear and degree of slump at elevated temperatures also correlate directly with coupling efficiency showing an increase with higher coupling efficiency. These results are expected from the stronger network for higher triblock content Kraton rubber.

Peel results show greater variability with substrate. Maximum adhesion to glass is at 50% coupling efficiency while maximum adhesion to aluminium and steel is at 70% coupling efficiency. The mechanism of failure in peel tests is critical in determining the significance of the peel value. Cohesive failure with a high kN per m value is the most desirable while adhesive failure to substrate indicates poor adhesion and high cohesive strength of the polymer. Coupling efficiency of the polymer in the range of 50-70% will give high peel values to glass and the mode of failure was cohesive for both glass and aluminium.

Similar results are found in Table 6, where the addition of an A-B diblock copolymer, block copolymer 8 in a 50/50, A-B-A/A-B weight ratio with block copolymer 1 provides improved adhesion in sealant III compared to sealant B consisting of 100 parts by weight A-B-A triblock, block copolymer 1.

TABLE 5

| Formulation | I | II | A |
|---|---|---|---|
| Block copolymer 1 | 0 | 30 | 57 |
| Block copolymer 3 | 100 | 70 | 43 |
| Midblock Resin (Regalrez 1018)[a] | 270 | 270 | 270 |
| Endblock Resin (Endex 160)[a] | 54 | 54 | 54 |
| Polypropylene (Shell DX 5088)[b] | 18 | 18 | 18 |
| Stabilizer (Irganox 1010)[c] | 1 | 1 | 1 |
| Stabilizer (Tinuvin 770)[c] | 1 | 1 | 1 |
| Stabilizer (Tinuvin P)[c] | 1.5 | 1.5 | 1.5 |
| A-B-A/A-B | 30/70 | 50/50 | 70/30 |
| Class | 2 | 5 | 5 |
| Properties | | | |
| Tensile strength (MPa) | 0.41 | 0.69 | 0.72 |
| Elongation (%) | 425 | 550 | 675 |
| 100% Modulus (MPa) | 0.23 | 0.24 | 0.30 |
| Hardness (Shore A) | 26 | 27 | 37 |
| Melt Viscosity (Pa.s)[d] | 1.040 | 1.780 | 3.055 |
| 180 ° Peel to Glass (kN per m)[e] | 3.3C | 6.8C | 3.0AS |
| SAFT[f] (°C) | 54 | 54 | 64 |
| Slump (°C) | 65 | 65 | 70 |

a) Product from Hercules Inc.
b) Product from Shell Chemical Co.
c) Product from Ciba Geigy
d) At 177 °C
e) C: cohesive failure
   AS: adhesive failure
f) Shear adhesion failure temperature

TABLE 6

| Formulation | III | B |
|---|---|---|
| Block copolymer 1 | 50 | 100 |
| Block copolymer 8 | 50 | 0 |
| Midblock Resin (Regalrez 1018) | 250 | 250 |
| Endblock Resin (Kristalex 5140) | 50 | 50 |
| Stabilizer (Irganox 1010) | 1 | 1 |
| Stabilizer (Tinuvin 770) | 1 | 1 |
| Stabilizer (Tinuvin P) | 1.5 | 1.5 |
| A-B-A/A-B Ratio | 50/50 | 100/0 |
| Class | 3 | -- |
| Properties | | |
| Hardness (Shore A) | 22 | 32 |
| 180 ° Peel to Steel (kN per m) | 3.3 | 1.6 |
| Melt Viscosity (Pa.s) | 0.800 | 2.200 |

Example 4

Table 7 compares the properties of three hot melt sealants formulated by combining polymers to achieve an A-B-A/A-B ratio of 50/50. The other sealant ingredients are identical in all three formulations. In successive formulations from IV to VI, the sealants possess improved strength and more importantly better high temperature characteristics. The experimental Kraton G polymers also provide the desired application viscosity for a hot melt insulated glass edge sealant.

TABLE 7

| Formulation | IV | V | VI |
|---|---|---|---|
| Block copolymer 1 | 30 | 0 | 0 |
| Block copolymer 3 | 70 | 0 | 0 |
| Block copolymer 4 | 0 | 28 | 0 |
| Block copolymer 5 | 0 | 72 | 0 |
| Block copolymer 6 | 0 | 0 | 21 |
| Block copolymer 7 | 0 | 0 | 79 |
| Regalrez 1018 | 270 | 270 | 270 |
| Endex 160 | 71 | 71 | 71 |
| Tinuvin P | 1.5 | 1.5 | 1.5 |
| Tinuvin 770 | 1 | 1 | 1 |
| Irganox 1010 | 1 | 1 | 1 |
| S-EB/S-EB-S Ratio | 50/50 | 50/50 | 50/50 |
| Class | 5 | 4 | 4 |
| Properties | | | |
| Tensile Strength (MPa) | 0.94 | 2.65 | 3.15 |
| Elongation (%) | 590 | 1280 | 1300 |
| Modulus, 100% (MPa) | 0.28 | 0.15 | 0.19 |
| Hardness (Shore A) | 32 | 16 | 15 |
| Melt Viscosity[a], (Pa.s) | 1.090 | 71.467 | -- |
| Peel to Glass (kN per m)[b] | 5.6PC | 7.4 | 9.6 |
| Peel to Glass/Soak (kN per m) | 3.7 | 1.2 | -- |
| Peel to Aluminium (kN per m) | 2.1 | 3.3 | 4.2 |
| SAFT (°C) | 59 | 72 | 84 |
| Slump (°C) | 65 | 110 | 150 |

a) measured at 177 °C
b) PC = partial cohesive failure

Example 5

Sealants in Table 8 are formulated to low A-B-A/A-B ratios that give cohesive failure in peel tests for adhesion while maximizing tensile strength. This table illustrates the use of various ingredients that promote the final properties of the sealant such as coupling agents, fillers, carbon black and terpene phenolic resin. The formulation can be compared to the properties of a commercially available hot melt butyl sealant (formulation C).

TABLE 8

| Formulation | VII | VIII | IX | X | XI | XII | XIII | XIV | C |
|---|---|---|---|---|---|---|---|---|---|
| Block copolymer 1 | | | | | | | | | |
| Block copolymer 2 | | | | | 33 | 33 | 33 | 0 | |
| Block copolymer 3 | | | | 65 | 5 | 5 | 5 | 5 | |
| Block copolymer 4 | | 72 | | 35 | 35 | | | | |
| Block copolymer 5 | | 28 | | | 27 | 27 | | | |
| Block copolymer 6 | 100 | | 68 | | | 33 | 66 | 66 | |
| Block copolymer 7 | | | 32 | | | | 29 | 29 | |
| Midblock Resin (Regalrez 1018) | 270 | 270 | 270 | 250 | 250 | 250 | 250 | 250 | |
| Endblock Resin (Endex 160) | 71 | 71 | 71 | 50 | 50 | 50 | 50 | 50 | |
| Polar Resin (Super Nirez 6040) | | | | | | | | 50 | |
| Stabilizer (Irganox 1010) | 1 | 1 | 1 | 1 | 1 | 1 | 1 | 1 | |
| Stabilizer (Tinuvin 770) | 1 | 1 | 1 | 1 | 1 | 1 | 1 | 1 | |
| Stabilizer (Tinuvin P) | 1.5 | 1.5 | 1.5 | 1.5 | 1.5 | 1.5 | 1.5 | 1.5 | |
| Filler (Calcium Carbonate) | | | | | 100 | | | | |
| Coupling agent 1 (A-1120) | | | | | 4.5 | | | | |
| Coupling agent 2 (LICA-09) | | | | | 2 | | | | |
| Pigment (carbon black) | | | | | 5 | 5 | | | |
| A-B-A/A-B Ratio | 0/100 | 20/80 | 20/80 | 20/80 | 20/80 | 20/80 | 20/80 | 20/80 | - |
| Class | 1 | 4 | 4 | 6 | 6 | 6 | 6 | 6 | - |

EP 0 238 135 B1

| Formulation Properties | VII | VIII | IX | X | XI | XII | XIII | XIV | C |
|---|---|---|---|---|---|---|---|---|---|
| Tensile strength (MPa) | 0.30 | 0.41 | 0.91 | 0.39 | 0.62 | 0.64 | 0.85 | 1.03 | 0.01 |
| Elongation (%) | 1050 | 1080 | 1000 | 863 | 600 | 1050 | 1400 | 1467 | 1300 |
| 100% Modulus (MPa) | 0.13 | 0.11 | 0.26 | 0.12 | 0.30 | 0.25 | 0.12 | 0.23 | 0.21 |
| Hardness (Shore A) | 16 | 15 | 15 | 17 | 24 | 15 | 13 | 28 | 45 |
| Melt Index (g/10 min) | 1152 | -- | 549 | 319 | 209 | 254 | 391 | 1116 | 207 |
| 180° Peel to Glass[a] (kN per m) | 5.6C | 6.3C | 14.0PC | 9.6C | 9.6 | 10.5PC | 13.1C | 10.7C | 3.0C |
| 180° Peel to Glass/soak (kN per m) | 0 | 7.9C | 0 | 0 | 4.6 | 0.5 | 0.7 | -- | 2.6C |
| 180° Peel to Aluminium (kN per m) | 6.1C | 3.7 | 6.6 | 8.2C | 7.0 | 5.8 | 6.7 | 13.1C | 3.5C |
| SAFT (°C) | 64 | 61 | 76 | 69 | 77 | 77 | 73 | 67 | 60 |
| Slump (°C) | 130 | 75 | 145 | 185 | 195 | 145 | 150 | 105 | 210 |

a)    PC = partial cohesive failure

Example 6

The moisture vapour transmission rate of the Kraton G polymer is affected by the selection of ingredients. Table 9 illustrates the effect of a midblock compatible resin, an endblock compatible resin and polyisobutylene (Vistanex LMMS, Exxon), a low moisture vapour transmission rate polymer. When properly formulated, Kraton G block copolymer based hot melt sealants (formulations II and XI) are as effective as a commercial hot melt butyl sealant (formulation C) in providing a barrier to moisture vapour transmission.

12

TABLE 9

| Moisture Vapour Transmission Rates[2] | | |
|---|---|---|
| | Condition | |
| | 23 °C, 50% R.H. g cm per m$^2$ per day[1] | 37.7 °C, 90% R.H. g cm per m$^2$ per day[1] |
| Block copolymer 1 | 0.42 (1.4) | 1.97 (1.4) |
| Block copolymer 2 Regalrez 1018 200 PHR | 0.19 (1.6) | 1.67 (1.6) |
| Block copolymer 2 Endex 160 50 PHR | 0.37 (1.4) | 2.46 (1.4) |
| Block copolymer 2 Vistanex LM-MS 50 PHR | 0.23 (1.4) | 1.04 (1.4) |
| Formulation II | | 0.93 (0.51) |
| Formulation XI | 0.25 (1.5) | |
| Formulation C | 0.22 (1.4) | 1.03 (1.4) |

1) the thickness in mm of the test piece is stated between brackets
2) R.H. means relative humidity
PHR means parts per hundred

**Claims**
**Claims for the following Contracting States : BE, DE, FR, GB, IT, NL, SE**

1. A hot melt sealant composition which comprises:-
   a. 0 to 50 parts by weight of a multiblock copolymer having at least two endblocks A and at least one elastomeric midblock B;
   b. 50 to 100 parts by weight of one or more diblock copolymers consisting of one block A' and one block B', wherein:
   the blocks A and A' comprise monoalkenyl arene blocks and the blocks B and B' comprise substantially completely hydrogenated conjugated diene polymer blocks, and the average molecular weight of the blocks A and A' is greater than the minimum molecular weight needed to obtain microphase separation and domain formation of the blocks A and A', and is less than the maximum molecular weight which would render the polymer incapable of being melt processed;
   the sum of the amounts of components (a) and (b) being 100 parts by weight;
   c. 50 to 400 parts by weight per 100 parts by weight of (a) and (b) of a midblock compatible component wherein said midblock compatible component is preferentially compatible with block B and B' said component present in a content sufficient to maintain the resultant composition in a pliable condition at room temperature and to maintain the glass transition temperature of the resultant composition below 10 °C; and
   d. 0 to 100 parts by weight per 100 parts by weight of (a) and (b) of an endblock compatible resin wherein said resin is preferentially compatible with blocks A and A' and is a coumarone-indene resin, a polystyrene resin, a vinyltoluene-alphamethylstyrene copolymer or a polyindene resin.

2. The composition of claim 1 wherein the blocks A and A′ are polystyrene blocks.

3. The composition of claim 1 wherein the blocks A and A′ are polyvinyltoluene blocks.

4. The composition as claimed in any one of the preceding claims wherein the B and B′ blocks are hydrogenated polybutadiene blocks.

5. The composition as claimed in any one of claims 1 to 3 wherein the B and B′ blocks are hydrogenated polyisoprene blocks.

6. The composition as claimed in any one of the preceding claims wherein the block copolymers contain 10% to 40% by weight of monoalkenyl arene.

7. The composition as claimed in any one of the preceding claims wherein said blocks A and A′ have a true molecular weight in the range of from 4,000 to 50,000.

8. The composition as claimed in any one of the preceding claims wherein said blocks A and A' in said multiblock copolymer and said diblock copolymer have different molecular weights.

9. The composition as claimed in any one of the preceding claims wherein said block B has a true molecular weight in the range of from 18,000 to 300,000.

10. The composition as claimed in any one of the preceding claims wherein said block B' has a true molecular weight in the range of from 9,000 to 150,000.

11. The composition as claimed in any one of the preceding claims wherein said endblock compatible resin has a true molecular weight in the range of from 3,000 to 9,000.

12. The composition as claimed in any one of the preceding claims which further contains a filler, a pigment, an ultraviolet stabilizer and/or an antioxidant.

13. Articles provided with a hot melt sealant composition as claimed in any one of the preceding claims.

**Claims for the following Contracting State : ES**

1. Process for preparation of a hot melt sealant composition which comprises intimately mixing and blending of
a. 0 to 50 parts by weight of a multiblock copolymer having at least two endblocks A and at least one elastomeric midblock B;
b. 50 to 100 parts by weight of one or more diblock copolymers consisting of one block A' and one block B', wherein:
the blocks A and A' comprise monoalkenyl arene blocks and the blocks B and B' comprise substantially completely hydrogenated conjugated diene polymer blocks, and the average molecular weight of the blocks A and A' is greater than the minimum molecular weight needed to obtain microphase separation and domain formation of the blocks A and A', and is less than the maximum molecular weight which would render the polymer incapable of being melt processed;
the sum of the amounts of components (a) and (b) being 100 parts by weight;
c. 50 to 400 parts by weight per 100 parts by weight of (a) and (b) of a midblock compatible component wherein said midblock compatible component is preferentially compatible with block B and B' said component present in a content sufficient to maintain the resultant composition in a pliable condition at room temperature and to maintain the glass transition temperature of the resultant composition below 10 °C; and
d. 0 to 100 parts by weight per 100 parts by weight of (a) and (b) of an endblock compatible resin wherein said resin is preferentially compatible with blocks A and A' and is a coumarone-indene resin, a polystyrene resin, a vinyltoluene-alphamethylstyrene copolymer or a polyindene resin.

2. Process according to claim 1, wherein the blocks A and A' in the starting block copolymers are polystyrene blocks.

3. Process according to claim 1, wherein the blocks A and A' in the starting block copolymers are polyvinyltoluene blocks.

4. Process as claimed in any one of the proceding claims wherein the B and B' blocks are hydrogenated polybutadiene blocks.

5. Process as claimed in any one of claims 1 to 3 wherein the B and B' blocks are hydrogenated polyisoprene blocks.

6. Process as claimed in any one of the preceding claims wherein the block copolymers contain 10% to 40% by weight of monoalkenyl arene.

7. Process as claimed in any one of the preceding claims wherein said blocks A and A' have a true molecular weight in the range of from 4,000 to 50,000.

8. Process as claimed in any one of the preceding claims wherein said blocks A and A' in said multiblock copolymer and said diblock copolymer have different molecular weights.

9. Process as claimed in any one of the preceding claims wherein said block B has a true molecular weight in the range of from 18,000 to 300,000.

10. Process as claimed in any one of the preceding claims wherein said block B' has a true molecular weight in the range of from 9,000 to 150,000.

11. Process as claimed in any one of the preceding claims wherein said endblock compatible resin has a true molecular weight in the range of from 3,000 to 9,000.

12. Process as claimed in any one of the preceding claims, characterized in that as further ingredients a filler, a pigment, an ultraviolet stabilizer and/or an antioxidant are included.

13. Articles provided with a hot melt sealant composition as obtained according to the process claimed in any one of the preceding claims.

**Patentansprüche**
**Patentansprüche für folgende Vertragsstaaten : BE, DE, FR, GB, IT, NL, SE**

1. Eine Heißschmelz-Dichtungszusammensetzung, umfassend:
   a. 0 bis 50 Gewichtsteile eines Mehrblockmischpolymerisats mit mindestens 2 Endblöcken A und mindestens einem elastomeren Mittelblock B;
   b. 50 bis 100 Gewichtsteile eines oder mehrerer Diblockmischpolymerisate, bestehend aus einem Block A' und einem Block B',
   wobei die Blöcke A und A' Monoalkenylarenblöcke und die Blöcke B und B' im wesentlichen vollständig hydrierte Polymerblöcke von konjugierten Dienen umfassen, und das durchschnittliche Molekulargewicht der Blöcke A und A' größer ist als das minimale Molekulargewicht, das notwendig ist, um eine Mikrophasentrennung und Bereichsbildung der Blöcke A und A' zu erhalten, und kleiner ist als das maximale Molekulargewicht, das das Polymer für die Schmelzverarbeitung ungeeignet machen würde;
   wobei die Summe der Mengen der Komponenten (a) und (b) 100 Gewichtsteile ausmacht;
   c. 50 bis 400 Gewichtsteile je 100 Gewichtsteile von (a) und (b) einer mit dem Mittelblock kompatiblen Komponente, wobei die mit dem Mittelblock kompatible Komponente vorzugsweise mit Block B und B' kompatibel ist, wobei die genannte Komponente in einer Menge vorliegt, die ausreicht, um die resultierende Zusammensetzung in biegsamem Zustand bei Raumtemperatur und um die Glasübergangstemperatur der resultierenden Zusammensetzung unter 10°C zu halten; und
   d. 0 bis 100 Gewichtsteile je 100 Gewichtsteile von (a) und (b) eines mit dem Endblock kompatiblen Harzes, wobei das genannte Harz vorzugsweise mit den Blöcken A und A' kompatibel ist und ein Cumaron-Inden-Harz, ein Polystyrolharz, ein Vinyltoluol-alpha-Methylstyrol-Mischpolymerisat oder ein Polyindenharz ist.

2. Die Zusammensetzung nach Anspruch 1, in welcher die Blöcke A und A' Polystyrolblöcke sind.

3. Die Zusammensetzung nach Anspruch 1, in welcher die Blöcke A und A' Polyvinyltoluolblöcke sind.

4. Die Zusammensetzung wie in einem der vorstehenden Ansprüche beansprucht, in welcher die Blöcke B und B' hydrierte Polybutadienblöcke sind.

5. Die Zusammensetzung wie in einem der Ansprüche 1 bis 3 beansprucht, in welcher die Blöcke B und B' hydrierte Polyisoprenblöcke sind.

6. Die Zusammensetzung wie in einem der vorstehenden Ansprüche beansprucht, in welcher Blockmischpolymerisate 10 bis 40 Gewichtsprozent Monoalkenylaren enthalten.

EP 0 238 135 B1

**7.** Die Zusammensetzung wie in einem der vorstehenden Ansprüche beansprucht, in welcher die Blöcke A und A' ein tatsächliches Molekulargewicht im Bereich von 4000 bis 50000 aufweisen.

**8.** Die Zusammensetzung wie in einem der vorstehenden Ansprüche beansprucht, in welcher die genannten Blöcke A und A' in dem genannten Mehrblockmischpolymerisat und in dem genannten Diblockmischpolymerisat unterschiedliche Molekulargewichte aufweisen.

**9.** Die Zusammensetzung wie in einem der vorstehenden Ansprüche beansprucht, in welcher der genannte Block B ein tatsächliches Molekulargewicht im Bereich von 18000 bis 300000 aufweist.

**10.** Die Zusammensetzung wie in einem der vorstehenden Ansprüche beansprucht, in welcher der genannte Block B' ein tatsächliches Molekulargewicht im Bereich von 9000 bis 150000 aufweist.

**11.** Die Zusammensetzung wie in einem der vorstehenden Ansprüche beansprucht, in welcher das genannte mit dem Endblock kompatible Harz ein tatsächliches Molekulargewicht im Bereich von 3000 bis 9000 aufweist.

**12.** Die Zusammensetzung wie in einem der vorstehenden Ansprüche beansprucht, welche ferner einen Füllstoff, ein Pigment, einen UV-Stabilisator und/oder ein Antioxidans enthält.

**13.** Gegenstände, die mit einer Heißschmelzdichtungszusammensetzung, wie in einem der vorstehenden Ansprüche beansprucht, versehen sind.

**Patentansprüche für folgenden Vertragsstaat : ES**

**1.** Verfahren zur Herstellung einer Heißschmelzdichtungszusammensetzung, welches das innige Mischen und Vermischen folgender Komponenten umfaßt:
a. 0 bis 50 Gewichtsteile eines Mehrblockmischpolymerisats mit mindestens 2 Endblöcken A und mindestens einem elastomeren Mittelblock B;
b. 50 bis 100 Gewichtsteile eines oder mehrerer Diblockmischpolymerisate, bestehend aus einem Block A' und einem Block B',
wobei die Blöcke A und A' Monoalkenylarenblöcke und die Blöcke B und B' im wesentlichen vollständig hydrierte Polymerblöcke von konjugierten Dienen umfassen, und das durchschnittliche Molekulargewicht der Blöcke A und A' größer ist als das minimale Molekulargewicht, das notwendig ist, um eine Mikrophasentrennung und Bereichsbildung der Blöcke A und A' zu erhalten, und kleiner ist als das maximale Molekulargewicht, das das Polymer für die Schmelzverarbeitung ungeeignet machen würde;
wobei die Summe der Mengen der Komponenten (a) und (b) 100 Gewichtsteile ausmacht;
c. 50 bis 400 Gewichtsteile je 100 Gewichtsteile von (a) und (b) einer mit dem Mittelblock kompatiblen Komponente, wobei die mit dem Mittelblock kompatible Komponente vorzugsweise mit Block B und B' kompatibel ist, wobei die genannte Komponente in einer Menge vorliegt, die ausreicht, um die resultierende Zusammensetzung in biegsamem Zustand bei Raumtemperatur und um die Glasübergangstemperatur der resultierenden Zusammensetzung unter 10°C zu halten; und
d. 0 bis 100 Gewichtsteile je 100 Gewichtsteile von (a) und (b) eines mit dem Endblock kompatiblen Harzes, wobei das genannte Harz vorzugsweise mit den Blöcken A und A' kompatibel ist und ein Cumaron-Inden-Harz, ein Polystyrolharz, ein Vinyltoluol-alpha-Methylstyrol-Mischpolymerisat oder ein Polyindenharz ist.

**2.** Verfahren nach Anspruch 1, in welchem die Blöcke A und A' in den Ausgangsblockmischpolymerisaten Polystyrolblöcke sind.

**3.** Verfahren nach Anspruch 1, in welchem die Blöcke A und A' in den Ausgangsblockmischpolymerisaten Polyvinyltoluolblöcke sind.

**4.** Verfahren wie in einem der vorstehenden Ansprüche beansprucht, in welchem die Blöcke B und B' hydrierte Polybutadienblöcke sind.

**5.** Verfahren wie in einem der Ansprüche 1 bis 3 beansprucht, in welchem die Blöcke B und B' hydrierte

16

EP 0 238 135 B1

Polyisoprenblöcke sind.

6. Verfahren wie in einem der vorstehenden Ansprüche beansprucht, in welchem die Blockmischpolymerisate 10 bis 40 Gewichtsprozent Monoalkenylaren enthalten.

7. Verfahren wie in einem der vorstehenden Ansprüche beansprucht, in welchem die Blöcke A und A' ein tatsächliches Molekulargewicht im Bereich von 4000 bis 50000 aufweisen.

8. Verfahren wie in einem der vorstehenden Ansprüche beansprucht, in welchem die genannten Blöcke A und A' in dem genannten Mehrblockmischpolymerisat und in dem genannten Diblockmischpolymerisat unterschiedliche Molekulargewichte aufweisen.

9. Verfahren wie in einem der vorstehenden Ansprüche beansprucht, in welchem der genannte Block B ein tatsächliches Molekulargewicht im Bereich von 18000 bis 300000 aufweist.

10. Verfahren wie in einem der vorstehenden Ansprüche beansprucht, in welchem der genannte Block B' ein tatsächliches Molekulargewicht im Bereich von 9000 bis 150000 aufweist.

11. Verfahren wie in einem der vorstehenden Ansprüche beansprucht, in welchem das genannte mit dem Endblock kompatible Harz ein tatsächliches Molekulargewicht im Bereich von 3000 bis 9000 aufweist.

12. Verfahren wie in einem der vorstehenden Ansprüche beansprucht, dadurch gekennzeichnet, daß als weitere Inhaltsstoffe ein Füllstoff, ein Pigment, einen UV-Stabilisator und/oder ein Antioxidans eingearbeitet werden.

13. Gegenstände, die mit einer Heißschmelzdichtungszusammensetzung versehen sind, die nach dem in einem der vorstehenden Ansprüche beanspruchten Verfahren erhalten worden ist.

**Revendications**

**Revendications pour les Etats contractants suivants : BE, DE, FR, GB, IT, NL, SE**

1. Composition obturante fusible par la chaleur, qui comprend :
   a. de 0 à 50 parties en poids d'un copolymère multi-séquencé comportant au moins deux séquences terminales A et au moins une séquence médiane élastomère B ;
   b. de 50 à 100 parties en poids d'un ou plusieurs copolymères diséquencés consistant en une séquence A' et une séquence B', dans lesquels les séquences A et A' comprennent des séquences monoalcényl-arène et les séquences B et B' comprennent des séquences de polymère diène-conjugués à peu près entièrement hydrogénés, et la masse moléculaire moyenne de séquence A et A' est supérieure à la masse moléculaire minimale nécessaire pour obtenir la séparation des microphases et la formation de domaines des séquences A et A' et est inférieure à la masse moléculaire maximale qui aurait rendu le polymère incapable d'un traitement à l'état fondu ;
   la somme des quantités des composants (a) et (b) étant de 100 parties en poids ;
   c. de 50 à 400 parties en poids par 100 parties en poids de (a) et (b) d'un composant compatible avec la séquence médiane, ledit composant compatible avec la séquence médiane étant de préférence compatible avec les séquences B et B', ledit composant étant présent en une quantité suffisante pour maintenir la composition résultante dans un état flexible à la température ambiante et pour maintenir la température de transition vitreuse de la composition résultante au-dessous de 10°C ; et
   d. de 0 à 100 parties en poids par 100 parties en poids de (a) et (b) d'une résine compatible avec les séquences terminales, ladite résine étant de préférence compatible avec les séquences A et A' et est une résine coumarone-indène, une résine polystyrène, un copolymère vinyltoluène/alpha-méthylstyrène ou une résine de polyindène.

2. Composition selon la revendication 1, dans laquelle les séquences A et A' sont des séquences de polystyrène.

3. Composition selon la revendication 1, dans laquelle les séquences A et A' sont des séquences de polyvinyltoluène.

17

**4.** Composition selon l'une quelconque des revendications précédentes, dans laquelle les séquences B et B' sont des séquences de polybutadiène hydrogéné.

**5.** Composition selon l'une quelconque des revendications 1 à 3, dans laquelle les séquences B et B' sont des séquences de polyisoprène hydrogéné.

**6.** Composition selon l'une quelconque des revendications précédentes, dans laquelle les copolymères séquencés contiennent des 10 à 40% en poids de monoalcényl arène.

**7.** Composition selon l'une quelconque des revendications précédentes, dans laquelle lesdites séquences A et A' ont une masse moléculaire vraie comprise entre 4000 et 50.000.

**8.** Composition selon l'une quelconque des revendications précédentes, dans laquelle lesdites séquences A et A' dans ledit copolymère multiséquencé et ledit copolymère diséquencé ont des masses moléculaires différentes.

**9.** Composition selon l'une quelconque des revendications précédentes, dans laquelle ladite séquence B présente une masse moléculaire vraie de 18.000 à 300.000.

**10.** Composition selon l'une quelconque des revendications précédentes, dans laquelle ladite séquence B' présente une masse moléculaire vraie de 9000 à 150.000.

**11.** Composition selon l'une quelconque des revendications précédentes, dans laquelle ladite résine compatible avec les séquences terminales présente une masse moléculaire vraie de 3000 à 9000.

**12.** Composition selon l'une quelconque des revendications précédentes, qui contient en outre une charge, un pigment, un stabilisant des ultraviolets et/ou un antioxydant.

**13.** Articles comportant une composition obturante fusible par la chaleur selon l'une quelconque des revendications précédentes.

**Revendications pour l'Etat contractant suivant : ES**

**1.** Procédé de préparation d'une composition obturante fusible à chaud, qui consiste à intimement mélanger et combiner :
a. de 0 à 50 parties en poids d'un copolymère multi-séquencé comportant au moins deux séquences terminales A et au moins une séquence médiane élastomère B ;
b. de 50 à 100 parties en poids d'un ou plusieurs copolymères diséquencés consistant en une séquence A' et une séquence B', dans lesquels les séquences A et A' comprennent des séquences monoalcényl-arène et les séquences B et B' comprennent des séquences de polymère diène-conjugués à peu près entièrement hydrogénés, et la masse moléculaire moyenne de séquence A et A' est supérieure à la masse moléculaire minimale nécessaire pour obtenir la séparation des microphases et la formation de domaines des séquences A et A' et est inférieure à la masse moléculaire maximale qui aurait rendu le polymère incapable d'un traitement à l'état fondu ;
la somme des quantités des composants (a) et (b) étant de 100 parties en poids ;
c. de 50 à 400 parties en poids par 100 parties en poids de (a) et (b) d'un composant compatible avec la séquence médiane, ledit composant compatible avec la séquence médiane étant de préférence compatible avec les séquences B et B', ledit composant étant présent en une quantité suffisante pour maintenir la composition résultante dans un état flexible à la température ambiance et pour maintenir la température de transition vitreuse de la composition résultante au-dessous de 10°C ; et
d. de 0 à 100 parties en poids par 100 parties en poids de (a) et (b) d'une résine compatible avec les séquences terminales, ladite résine étant de préférence compatible avec les séquences A et A' et est une résine coumarone-indène, une résine polystyrène, un copolymère vinyltoluène/alpha-méthylstyrène ou une résine de polyindène.

**2.** procédé selon la revendication 1, dans lequel les séquences A et A' dans les copolymères séquencés de départ sont des séquences de polystyrène.

3. Procédé selon la revendication 1, dans lequel les séquences A et A' dans les copolymères séquencés de départ sont des séquences de polyvinyltoluène.

4. Procédé selon l'une quelconque des revendications précédentes, dans lequel les séquences B et B' sont des séquences de polybutadiène hydrogéné.

5. procédé selon l'une quelconque des revendications 1 à 3, dans lequel les séquences B et B' sont des séquences de polyisoprène hydrogéné.

6. Procédé selon l'une quelconque des revendications précédentes, dans lequel les copolymères séquencés contiennent de 10 à 40% en poids de monoalcényl arène.

7. Procédé selon l'une quelconque des revendications précédentes, dans lequel lesdites séquences A et A' ont une masse moléculaire vraie de 4000 à 50.000.

8. Procédé selon l'une quelconque des revendications précédentes, dans lequel lesdites séquences A et A' dans ledit copolymère multiséquencé et ledit copolymère diséquencé ont des masses moléculaires différentes.

9. Procédé selon l'une quelconque des revendications précédentes, dans lequel ladite séquence B présente une masse moléculaire vraie de 18.000 à 300.000.

10. Procédé selon l'une quelconque des revendications précédentes, dans lequel ladite séquence B' présente une masse moléculaire vraie de 9000 à 150.000.

11. Procédé selon l'une quelconque des revendications précédentes, dans lequel ladite résine compatible avec les séquences terminales présente une masse moléculaire vraie de 3000 à 9000.

12. Procédé selon l'une quelconque des revendications précédentes, caractérisé en ce qu'à titre d'ingrédients supplémentaires, on incorpore une charge, un pigment, un stabilisant aux ultraviolets et/ou un antioxydant.

13. Article muni d'une composition obturante fusible par la chaleur, qu'on obtient par le procédé selon l'une quelconque des revendications précédentes.